# EUROPÄISCHE PATENTSCHRIFT

(11) **EP 2 454 311 B1**
(45) Veröffentlichungstag und Bekanntmachung des Hinweises auf die Patenterteilung: **30.10.2013**
(21) Anmeldenummer: 10803436.4
(22) Anmeldetag: 27.12.2010
(51) Int. Cl.: C08G 63/88, B01J 19/20

(54) **VERFAHREN UND VORRICHTUNG ZUR HERSTELLUNG VON TEILKRISTALLINEM POLYMERMATERIAL**
METHOD AND DEVICE FOR PRODUCING SEMICRYSTALLINE POLYMER MATERIAL
PROCÉDÉ ET DISPOSITIF POUR FABRIQUER UNE MATIÈRE POLYMÈRE PARTIELLEMENT CRISTALLINE

(30) Priorität: 28.12.2009 AT 20432009
(43) Veröffentlichungstag der Anmeldung: 23.05.2012
(73) Patentinhaber: EREMA Engineering Recycling Maschinen und Anlagen Gesellschaft m.b.H., 4052 Ansfelden (AT)
(72) Erfinder: FEICHTINGER, Klaus, A-4040 Linz (AT); HACKL, Manfred, A-4040 Linz-Urfahr (AT); RÖSSLER-CZERMAK, Andreas, A-4501 Neuhofen an der Krems (AT); WEIS, Gerald, 63741 Aschaffenburg (DE)
(74) Vertreter: Wildhack & Jellinek
(86) Internationale Anmeldenummer: PCT/AT2010/000494
(87) Internationale Veröffentlichungsnummer: WO 2011/079342

(56) Entgegenhaltungen:
- EP-A1- 0 597 155
- JP-A- 2007 023 153

## Beschreibung

Die Erfindung betrifft ein Verfahren zur Herstellung von teilkristallinem Polymermaterial gemäß dem Oberbegriff des Anspruchs 1 sowie eine Vorrichtung zur Durchführung des Verfahrens gemäß dem Oberbegriff des Anspruchs 6.

Verfahren zur Kristallisation von Polymeren sind in zahlreichen Varianten bekannt und werden vor allem dafür eingesetzt, um die Lagerung, den Transport, die Behandlung oder die weitere Verarbeitung der Polymere zu erleichtern sowie die Eigenschaften dieser Polymere zu beeinflussen.

Bei der Kristallisation von thermoplastischen Polymeren kommt es zu einer partiellen Ordnung der Molekülketten im Polymer. Ausgehend von Kristallisationskeimen lagern sich die Molekülketten faltenförmig aneinander, bilden zunächst eine Lamellenstruktur und in weiterer Folge übergeordnete Strukturen, wie beispielsweise Sphärolithe.

Die Kristallisation ist von verschiedenen Parametern abhängig, wie beispielsweise der Temperatur bei der Kristallisation, dem Molekulargewicht des Polymers, der Art des Polymers, aber auch von der Feuchtigkeit, Lösungsmitteln, dem Druck oder allfälligen Füllstoffen im Polymer.

Die Kristallisation bzw. der Grad der Kristallisation hat wesentlichen Einfluss auf die optischen, mechanischen, thermischen und chemischen Eigenschaften des Polymers. Insbesondere ist es ein wesentliches Anliegen, die Klebeneigung der meist als Granulate vorliegenden amorphen Polymere durch die Erhöhung des Kristallisationsgrades zu verringern. Auf diese Weise können vor allem die Verarbeitung, der Transport und die Lagerung der Granulate wesentlich vereinfacht werden.

Um die Klebrigkeit von thermoplastischen Polymeren, beispielsweise von Polyethylenterephthalat (PET), im Kristallisationsprozess zu verringern, sind aus dem Stand der Technik zahlreiche Verfahren bekannt.

So beschreibt die US 3,746,688 ein dem Kristallisationsprozess vorausgeschicktes mehrstündiges Trocknen der amorphen Granulate. Die US 3,014,011 beschreibt eine Reduzierung der Klebrigkeit durch eine vorausgehende Behandlung des Granulats mit einem Quellmittel. Die US 5,919,872 beschreibt den Einsatz von Beschichtungsmitteln, um die Klebeneigung zu reduzieren. In der EP 1 203 040 oder der US 3,544,525 werden die Granulate auf einer bestimmten Temperatur unterhalb der Schmelztemperatur gehalten und getempert.

Die JP 2007 023153 A beschreibt ein Verfahren zum Kristallisieren von Polyestern, in dem dem amorphen Polyester ein geringer Anteil eines kristallisierten Polyestergranulats angesetzt wird.

Außerdem ist es aus dem Stand der Technik bekannt, den im Kristallisationsreaktor vorliegenden, zum Zusammenkleben neigenden amorphen

Rohgranulaten, einen gewissen Anteil an bereits teilkristallinen Granulaten zuzumischen, um die Rieselfähigkeit der Teilchen im Kristallisationsreaktor zu erhalten. Dies wird dadurch erreicht, dass sich die nicht klebrigen teilkristallinen Granulate zwischen die amorphen Granulate schieben und insgesamt das Granulat auch bei höherer Temperatur stückig bleibt und nicht zusammenklebt.

All diese oben genannten Verfahren haben jedoch teilweise Nachteile, insbesondere ist es nicht immer vorteilhaft, Beschichtungsmittel, Quellmittel oder dergleichen einzusetzen oder führt beispielsweise eine vorangestellte Vorbehandlung des Rohmaterials zu einer Verlängerung des Gesamtprozesses und zu erhöhten Kosten.

Insbesondere ist auch die Rückmischung des teilkristallinen Materials zu dem amorphen Rohgranulat ein recht kritischer Prozess, da bei der Rückmischung direkt in den Kristallisationsreaktor - wie dies im Stand der Technik derzeit üblich ist - keine ausreichende Durchmischung gewährleistet ist und erzielt werden kann und es zumindest in Teilbereichen des Reaktors zu Klebenestern aus amorphen Granulaten kommt.

Es ist somit Aufgabe der vorliegenden Erfindung, ein Verfahren der eingangs erwähnten Art so weiterzuentwickeln, dass damit eine gute Durchmischung der überwiegend amorphen mit den teilkristallinen Granulaten zu erreichbar ist, ohne dass die Granulate miteinander verkleben.

Weiters ist es Aufgabe der Erfindung, eine Vorrichtung zur Durchführung dieses Verfahrens zu schaffen.

Für das Verfahren wird die Aufgabe durch die kennzeichnenden Merkmale des Anspruchs 1 gelöst. Dabei ist vorgesehen, dass das abgezweigte teilkristalline Polymermaterial vor dessen Rückmischung in den Kristallisationsreaktor mit dem zur Verklebung neigenden unbehandelten und überwiegend amorphen Rohpolymermaterial zusammengeführt und gemischt wird und erst danach die Mischung in den Kristallisationsreaktor eingebracht wird.

Diese Vorgangsweise hat den Vorteil, dass bereits vor dem Kristallisationsreaktor eine intensive Durchmischung stattfinden kann und ein mögliches Verkleben bereits in einem Stadium vor dem Kristallisationsreaktor verhindert wird. Eine Bildung von Klebenestern im Kristallisationsreaktor wird dabei ausgeschlossen, da bereits eine nicht zur Verklebung neigende Mischung in den Kristallisationsreaktor gelangt. Auf diese Weise ist die Erhaltung der Rieselfähigkeit permanent gewährleistet und kann die Kristallisation effektiv und homogen geführt werden.

Außerdem verringert sich auf diese Weise die erforderliche Menge des rückgemischten teilkristallinen Polymers, da dieses effektiver wirkt. Durch das geringere Rückmischverhältnis verringert sich in weiterer Folge die notwendige Verweilzeit im Reaktor und somit auch die Größe und der Energieverbrauch der benötigten Kristallisationsvorrichtungen.

Bei einer Vorrichtung der eingangs erwähnten Art wird die Aufgabe dadurch gelöst, dass die Übergabestrecke in den Zugabestutzen einmündet.

Dadurch dass vorgesehen ist, dass die Zumischung eben nicht direkt in den Kristallisationsreaktor erfolgt, sondern eine vorgeschaltete Vorabmischung im Zugabstutzen erfolgt, werden die oben stehenden Vorteile auf einfache Art erreicht.

Der Zugabestutzen mündet in den Kristallisationsbehälter oberhalb des Materialniveaus. Die Übergabestrecke schließt an den Kristallisationsbehälter in einem Bereich unterhalb des Materialniveaus an.

Unter dem Begriff "amorphes Rohgranulat" ist nicht nur ausschließlich bzw. zu 100% amorphes Granulat ohne jeglichen Kristallisationsanteil zu verstehen, sondern ein Granulat, das ein Fachmann als überwiegend amorph bzw. als zu amorph, um die angestrebten Anforderungen zu erfüllen, einstufen würde.

Die folgenden abhängigen Ansprüche beschreiben vorteilhafte Weiterentwicklungen und Ausgestaltungen des Verfahrens und der Vorrichtung:

Gemäß einer vorteilhaften Weiterentwicklung des Verfahrens ist vorgesehen, dass die Zusammenführung und Mischung des abgezweigten teilkristallinen Polymermaterials zum Rohpolymermaterial in einem Bereich außerhalb des Kristallisationsreaktors, insbesondere in einem Zugabestutzen erfolgt. Auf diese Weise wird eine effektive Durchmischung erreicht und die Gefahr des Verklebens wirksam reduziert.

Gemäß einer weiteren Verfahrensführung ist es vorteilhaft, wenn das aus dem Kristallisationsreaktor ausgebrachte teilkristalline Polymermaterial, insbesondere über eine Vertikalförderschnecke, in eine Höhe oberhalb des Kristallisationsreaktors gebracht wird und das abgezweigte teilkristalline Polymermaterial anschließend unter Schwerkraftwirkung, insbesondere über eine Materialrutsche, zum Zugabebereich für dessen Rückmischung rutscht. Auf diese Weise kann die potentielle Energie des Granulats durch die Einwirkung der Schwerkraft leicht in kinetische Energie umgewandelt werden und erhält das Granulat auf einfache Weise eine gewisse Strömungsgeschwindigkeit, die in weiterer Folge für die gute Zusammenmischung vorteilhaft ist.

In diesem Zusammenhang ist es vorteilhaft, wenn sowohl das abgezweigte teilkristalline Polymermaterial als auch das Rohpolymermaterial am Ort und zum Zeitpunkt ihres Zusammentreffens mit jeweils einer gewissen Strömungsgeschwindigkeit in Fließbewegung sind, wobei die Strömungsrichtungen der beiden Materialströme insbesondere in einem spitzen Winkel ε, von vorzugsweise zwischen 20° und 55°, insbesondere 30° bis 40°, zusammentreffen. Wenn beide Materialströme in Bewegung sind, verringert sich die Gefahr, dass Teilchen zusammenkleben, weiters und die Bewegungsenergie der Teilchen wird für eine gute Durchmischung herangezogen.

Vorteilhaft ist es in weiterer Folge, wenn darauf geachtet wird, dass sowohl das abgezweigte teilkristalline Polymermaterial als auch das Rohpolymermaterial permanent und in jedem Abschnitt des Verfahrens stückig und rieselfähig gehalten werden. Dies erleichtert das Handling und die Bearbeitung der Granulate.

Gemäß einer vorteilhaften Verfahrensführung erfolgt die Erwärmung des Polymers im Kristallisationsreaktor ohne Zufuhr externer Heizenergie bzw. ohne zusätzliche Heizmittel. Die für eine erfolgreiche und rasche Kristallisation erforderliche Wärme kommt vorteilhafterweise ausschließlich aus der inneren Energie der Granulate und/oder entsteht bei der exothermen Kristallisation.

Eine vorteilhafte Ausgestaltung der Vorrichtung ergibt sich, wenn vorgesehen ist, dass die Übergabestrecke ein, insbesondere direkt an den Kristallisationsreaktor angeschlossenes, Fördermittel, vorzugsweise eine Vertikalförderschnecke, umfasst, mit dem das aus dem Kristallisationsreaktor austretende teilkristalline Polymermaterial in eine Höhe oberhalb des Kristallisationsreaktors förderbar ist. In weiterer Folge ist es vorteilhaft, wenn die Übergabestrecke eine, vorzugsweise als Rohr ausgebildete, Materialrutsche umfasst, die, ausgehend von einem oberen Bereich des Fördermittels, schräg in den Zugabestutzen einmündet, wobei die Materialrutsche vorzugsweise einen durchschnittlichen Neigungswinkel β zur Horizontalen zwischen 15° und 50°, insbesondere zwischen 20° und 30°, aufweist. Damit kann das rückzumischende Material von einem gewissen Höhenniveau unter Einwirkung der Schwerkraft nach unten rutschen und ohne zusätzliches Fördermittel mit einer erhöhten Geschwindigkeit zum Rohpolymer zugemischt werden. Um Verstopfungen zu vermeiden und eine gewisse Mindestgeschwindigkeit zu gewährleisten, ist für die Materialrutsche der erwähnte Neigungswinkel β vorteilhaft.

Dadurch dass der Zugabestutzen in einem oberen Kantenbereich des Kristallisationsreaktors angeordnet ist und/oder, insbesondere unter einem Winkel δ zwischen 25° und 60°, insbesondere 30° bis 40°, zur Horizontalen, nach unten geneigt ist, wodurch das Polymermaterial in den Kristallisationsreaktor rutschen kann, erhält auch das überwiegend amorphe Rohgranulat eine gewisse Geschwindigkeit und rutscht in den Kristallisationsreaktor hinein.

Eine äußerst vorteilhafte Ausgestaltung ist gegeben, wenn die Materialrutsche einen, dem Fördermittel nahen, oberen Abschnitt und einen, dem Zugabestutzen nahen untersten Endbereich bzw. Knickabschnitt aufweist, wobei der Knickabschnitt zum Zugabestutzen hin winkelig angestellt bzw. nach unten abgeknickt ist, wobei der Winkel α zwischen dem oberen Abschnitt der Materialrutsche und dem Knickabschnitt insbesondere zwischen 60° und 140°, vorzugsweise zwischen 90° und 100°, ist. Der Knickabschnitt wirkt wie ein Prallblech. Die teilkristallinen Polymere treffen mit erhöhter Geschwindigkeit auf die gegenüberliegende Wand des Knickabschnitts auf und werden dadurch durcheinander gewirbelt. Auf diese Weise kommt es zu einer besseren Verteilung und zu einer Variation der Bewegungsrichtungen und Geschwindigkeiten der einzelnen Teilchen und es wird eine Schichtung der beiden Materialströme im Zugabestutzen vermieden.

Um allfällige Verstopfungen zu vermeiden, ist es vorteilhaft, wenn vorgesehen ist, dass die Mittelachse des Zugabestutzens mit der Mittelachse des Knickabschnitts einen spitzen Winkel ε, von vorzugsweise zwischen 20° und 55°, insbesondere 30° bis 40°, einschließt. Die Materialströme treffen damit unter im Wesentlichen ähnlich ausgerichteten Richtungsvektoren aufeinander, wobei allerdings trotzdem keine Schichtung im Stutzen erfolgt.

Gemäß einer vorteilhaften Ausführungsform ist die Mittelachse des Knickabschnitts nahezu vertikal ausgerichtet, insbesondere in einem Winkel ζ zur Vertikalen zwischen 0° und 45°, insbesondere zwischen 15° und 25°. Die abprallenden Granulate fallen auf diese Weise nahezu im freien Fall nach unten in den Zugabestutzen.

Eine vorteilhafte Vorrichtung ist dann gegeben, wenn die Mittelachse des Knickabschnitts und die Mittelachse des Zugabestutzens eine Ebene definieren bzw. aufspannen, die den Kristallisationsreaktor in zwei im wesentlichen gleich große Teilräume aufteilt, und das Fördermittel bzw. die Mittelachse der Vertikalförderschnecke in dieser Ebene liegt.

Alternativ kann vorgesehen sein, dass der obere Abschnitt der Materialrutsche gegenüber der Ebene in einem Winkel γ, insbesondere zwischen 10° und 30° ausgerichtet ist und/oder das Fördermittel bzw. die Mittelachse der Vertikalförderschnecke außerhalb der Ebene liegt. Durch die platzsparende außermittige Anordnung des Vertikalförderers und die von oben gesehen geknickte Ausgestaltung der Materialrutsche kann den rückzumischenden Teilchen ein weiterer Impuls gegeben werden.

Zur Erreichung einer guten Durchmischung ist es vorteilhafterweise möglich, dass die Breite der Materialrutsche vor dem Knickabschnitt zunimmt und gegebenenfalls ihre Querschnittsform ändert.

Eine gute Durchmischung und ein gleichmäßiges Einbringen der bereits vermischten Granulate sieht vorteilhafterweise vor, dass sich der Zugabestutzen in seinem dem Kristallisationsreaktor nahen Endbereich fächerförmig verbreitert. Dadurch wird das Granulat besser im Kristallisationsreaktor verteilt.

In diesem Zusammenhang ist es vorteilhaft, wenn vorgesehen ist, dass in der unteren Rutschfläche des Zugabestutzens eine Anzahl an geraden vertieften Rinnen ausgebildet ist. Das Rohpolymermaterial, das über die Zugabeöffnung eintritt und auch das von oben kommende teilkristalline Material rutschen somit in diesen Rinnen und werden dadurch gleichmäßig über die gesamte Breite des Zugabestutzens verteilt, wodurch eine gute Durchmischung erfolgt und ein breiter und relativ dünner und entsprechend leicht homogen ein- und durchmischbarer Materialstrom in den Kristallisationsreaktor gelangt.

Auch ist es, wenn das Material in den Rinnen fließt, dann unkritisch, wenn der Zugabestutzen quer zur Längsrichtung geneigt ist, beispielsweise durch einen ungenauen Einbau. Andernfalls würde sich das Material auf einer Seite des Stutzens sammeln, schlecht durchmischen und als dicker, schwer einarbeitbarer Materialstrom in den Kristallisationsreaktor gelangen.

Vorzugsweise nehmen die Höhen bzw. Tiefen und/oder die Breiten der Rinnen stromabwärts bzw. in Fließrichtung hin zu, wodurch eine zusätzliche Vergleichmäßigung und Homogenisierung des Materials erfolgt.

Gemäß einer vorteilhaften Ausgestaltung ist vorgesehen, dass in der Vertikalförderschnecke eine weitere Austragsöffnung zum Ausbringen vorgesehen ist, -wobei die Austragsöffnung tiefer als oder maximal in gleicher Höhe wie die Öffnung, an die die Materialrutsche angeschlossen ist, liegt.

ist diesem Zusammenhang ist es vorteilhaft, wenn eine Steuerungseinrichtung vorgesehen ist, mit der derjenige Anteil des teilkristallinen Polymermaterials, der in die Materialrutsche abgezweigt wird und/oder derjenige Anteil des teilkristallinen Polymermaterials, der über die Austragsöffnung ausgebracht wird, einstellbar ist. Damit kann leicht und effektiv eine Steuerung des Rückmischverhältnisses erfolgen. Alternativ kann das teilkristalline Material auch durch einen separaten Abzug direkt aus dem Kristallisationsreaktor abgezweigt werden.

An das Fördermittel bzw. an die Austragsöffnung kann in weiterer Folge ein Behälter zum Auffangen und Lagern und/oder ein Behälter zur Weiterbehandlung des teilkristallinen Polymermaterials, beispielsweise ein SSP-Behälter angeschlossen sein. Der Anschluss erfolgt vorteilhafterweise über eine Förderschnecke, mit der die Menge des auszutragenden teilkristallinen Granulats gesteuert werden kann.

Gemäß einer vorteilhaften Ausführungsform ist vorgesehen, dass vor dem Kristallisationsreaktor bzw. vor dem Zugabestutzen eine Zentrifuge zur Abscheidung von Oberflächenfeuchte und allfälligem Feinanteil angeordnet ist, mit der das Rohpolymermaterial mit erhöhter Geschwindigkeit, vorzugsweise tangential in den Zugabestutzen eingebracht wird. Die in den Zugabestutzen eintretenden amorphen Rohgranulate behalten auf diese Weise den ihnen in der Zentrifuge zugeteilten Geschwindigkeitsimpuls. Diese wird in weiterer Folge für die Zumischung und die gute Durchmischung benützt.

Weitere Vorteile und Ausgestaltungen der Erfindung ergeben sich aus der Beschreibung und den beiliegenden Zeichnungen.

Die Erfindung ist anhand von Ausführungsbeispielen in den Zeichnungen schematisch dargestellt und wird im Folgenden unter Bezugnahme auf die Zeichnungen beispielsweise beschrieben.
Fig. 1 zeigt die erfindungsgemäße Vorrichtung in einer Seitenansicht.
Fig. 2 zeigt die Vorrichtung gemäß Fig. 1 von vorne.
Fig. 3 zeigt die Vorrichtung von der anderen Seite.
Fig. 4 zeigt die Vorrichtung von oben.
Fig. 5 zeigt eine Schrägansicht von oben.
Fig. 6a und 6b zeigen den Bereich eines vorteilhaften Zugabestutzens in Detailansicht.
Fig. 7a, b und c zeigen Details eines vorteilhaften Zugabestutzens.

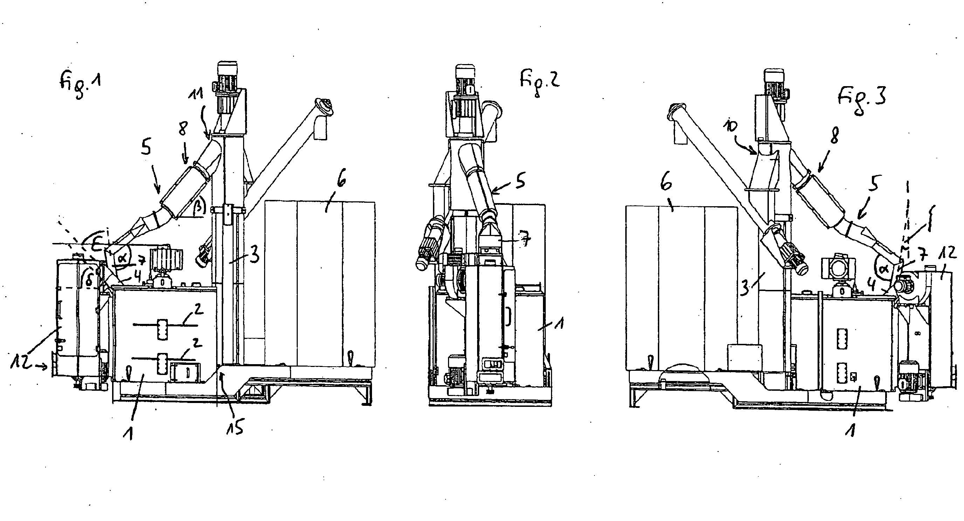

In Fig. 1 ist eine exemplarische, besonders vorteilhafte Ausführungsform der erfindungsgemäßen Vorrichtung in Seitenansicht dargestellt. Links unten befindet sich ein Kristallisationsreaktor 1, der in üblicher Art und Weise in Form eines zylindrischen Behälters mit einem horizontale Boden und vertikalen Seitenwänden ausgestaltet ist. Im Inneren des Kristallisationsreaktors 1 befindet sich ein Misch- und Rührwerk 2. Im vorliegenden Fall ist dieses auf zwei übereinanderliegenden Ebenen angeordnet. Das Misch- und Rührwerk 2 umfasst rotierende Flügel bzw. Stäbe, die sich jeweils in einer horizontalen und zum Boden parallelen Ebene drehen und auf einer gemeinsamen vertikalen Antriebsstange angeordnet sind. Sie dienen dazu, das im Kristallisationsreaktor 1 vorliegende Polymermaterial permanent zu bewegen, zu mischen und in fließfähiger, stückiger Form zu halten.

Der Kristallisationsreaktor 1 verfügt gegebenenfalls über Mittel zum Erwärmen und/oder Kühlen des Polymermaterials. Die Erwärmung kann dabei von außen über eine Mantelheizung oder von innen über beheizte Misch- und Rührwerkzeuge 2 erfolgen. Im Wesentlichen besitzen die Granulate jedoch noch ausreichend innere Energie und Wärme, sodass keine zusätzliche Heizung notwendig ist. Außerdem ist der Kristallisationsvorgang exotherm, wodurch sogar eine Kühlung erforderlich sein kann, um ein teilweises Aufschmelzen der Granulate zu vermeiden.

Die Temperatur der Granulate muss für eine effektive Kristallisation permanent oberhalb der Glasübergangstemperatur und unterhalb des Schmelzpunktes gehalten werden. Für PET liegt die optimale Kristallisationsrate bei einer Temperatur von ca. 174°C.

Im linken oberen Randbereich des Kristallisationsreaktors 1 ist ein Zugabestutzen 4 angeordnet, über den das Material in den Kristallisationsreaktor 1 eingebracht wird. Der Zugabestutzen 4 liegt im Betrieb oberhalb des Materialniveaus der bewegten Teilchen. Der Zugangsstutzen 4 ist in einem Winkel δ von etwa 30 bis 40° schräg nach unten geneigt, wodurch das Polymermaterial selbständig in den Kristallisationsreaktor 1 rutschen kann.

Vor dem Zugabestutzen 4 befindet sich eine Zentrifuge 12. In der Zentrifuge 12 wird das frisch gebildete Rohgranulat zur Abscheidung seiner Oberflächenfeuchte und von eventuellem Feinanteil behandelt. Das Rohpolymermaterial wird unten in die Zentrifuge 12 eingespeist, und die Teilchen werden nach oben gewirbelt, wobei sie gewisse Bewegungsimpulse und Geschwindigkeiten erhalten. Über die Zugabeöffnung 14, die den obersten Bereich der Zentrifuge 12 mit dem Beginn des Zugabestutzens verbindet, werden die noch amorphen Rohpolymerteilchen in den Zugabestutzen 4 eingespeist.

Im untersten Bereich des Kristallisationsreaktors 1 ist auf Höhe des unteren Misch- und Rührwerkzeuges 2 eine Austragsöffnung 15 vorgesehen, aus der das behandelte und nunmehr teilkristalline Polymermaterial aus dem Kristallisationsreaktor 1 ausbringbar ist. Die Austragsöffnung 15 liegt im Betrieb unterhalb des Materialniveaus der bewegten Teilchen. An diese Austragsöffnung 15 ist der Beginn einer Übergabestrecke 3, 5 angeschlossen, über die ein Teil des teilkristallinen Polymermaterials in den Kristallisationsreaktor 1 rückführbar ist.

Die Übergabestrecke 3, 5 umfasst ein direkt an den Kristallisationsreaktor 1 angeschlossenes Fördermittel 3 in Form einer Vertikalförderschnecke 3. Diese Vertikalförderschnecke 3 rotiert mit einer Umdrehungsgeschwindigkeit von etwa 100 bis 150 Umdrehungen pro Minute und fördert auch in teilgefüttertem Zustand das aus dem Kristallisationsreaktor 1 austretende teilkristalline Polymermaterial auf ein Höhenniveau oberhalb des Kristallisationsreaktors 1, im vorliegenden Fall in auf etwa die doppelte Höhe der Höhe des Kristallisationsreaktors 1.

Im obersten Bereich der Vertikalförderschnecke 3 ist eine Öffnung 11 ausgebildet, durch die das Material in eine rohrförmige geschlossene Materialrutsche 5 eingebracht wird. Die Materialrutsche 5 ist schräg geneigt mit einem durchschnittlichen Neigungswinkel β gemessen zur Horizontalen von etwa 30° bis 40°. Die Materialrutsche 5 mündet nicht gerade, sondern unter Ausbildung eines bestimmten Winkels in den Zugabestutzen 4 ein. Auf diese Weise wird ein Rückmischkreislauf ausgebildet, über den das teilkristalline, nicht klebrige Granulat zu den klebrigen amorphen Rohgranulaten zugemischt wird.

Die Materialrutsche 5 weist einen dem Fördermittel 3 nahen oberen Abschnitt 8 und einen dem Zugabestutzen 4 nahen unteren Knickabschnitt 7 auf. Der Knickabschnitt 7 ist zum Zugabestutzen 4 hin winkelig angestellt und nach unten abgeknickt, im vorliegenden Fall unter einem Winkel α von etwa 95°. Der Knickabschnitt 7 bzw. die Mittelachse des Knickabschnitts 7 ist relativ vertikal bzw. lotrecht ausgerichtet, im vorliegenden Fall in einem Winkel ζ von etwa 15 bis 20° zum Lot.

Wie aus Fig. 1 und auch aus Fig. 3 gut erkennbar, sind der Knickabschnitt 7 und der Zugabestutzen 4 in einem spitzen Winkel ε zueinander ausgerichtet und schließen deren Mittelachsen einen Winkel von etwa 35° ein. Die beiden Materialströme treffen somit mit jeweils erhöhten Geschwindigkeiten unter diesem spitzen Winkel aufeinander und durchmischen sich.

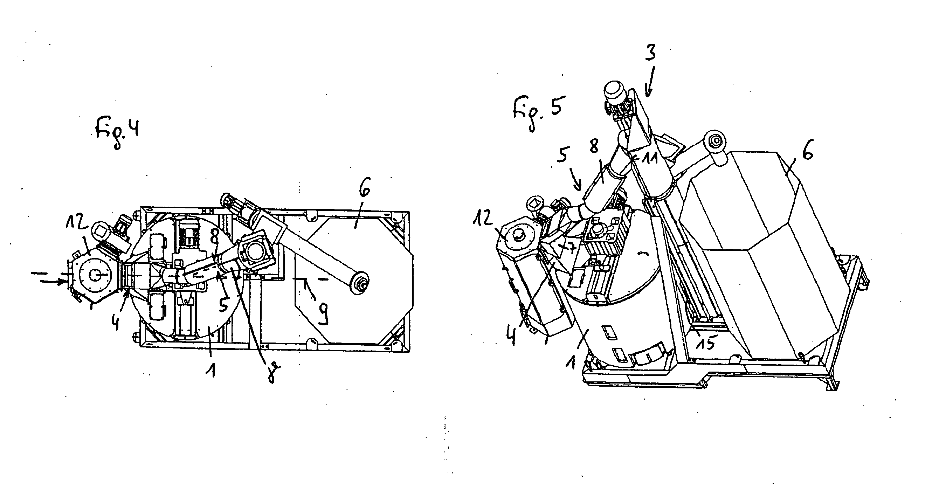

In Fig. 4 ist die erfindungsgemäße Vorrichtung von oben dargestellt. Erkennbar ist, dass die Mittelachsen des Knickabschnitts 7 und des Zugabestutzens 4 eine Ebene 9 definieren bzw. aufspannen. Diese vertikal ausgerichtete Ebene 9 teilt den Kristallisationsreaktor 1 im Wesentlichen in zwei gleich große Teilräume. Die Vertikalförderschnecke 3 liegt nicht in dieser Ebene 9. Damit ist auch der obere Abschnitt 8 der Materialrutsche 5 in einem Winkel γ von etwa 20° zur Ebene 9 ausgerichtet. Gemäß einer vorteilhaften Ausgestaltung ist die Vertikalförderschnecke 3 ebenfalls in der Ebene 9 angeordnet bzw. liegt die vertikale Längsachse der Vertikalförderschnecke 3 in dieser Ebene 9.

Im Bereich des Knickes der Materialrutsche 5 um den Winkel γ liegt auch ein Knick zur Horizontalen vor. In diesem Bereich verringert sich der Neigungswinkel β um etwa 5 bis 10°. Das rutschende Material erfährt somit in zweierlei Hinsicht eine Richtungsänderung.

In Fig. 2 und Fig. 3 ist ersichtlich, dass sich die Breite der Materialrutsche 5 nach unten zu erweitert. Im Bereich direkt vor dem Knickabschnitt 7 verbreitert die sich die Materialrutsche 5 konisch bei im Wesentlichen gleichbleibender Höhe. Außerdem verändert sich die Querschnittsform der Materialrutsche 5 von etwa kreisförmig auf rechteckig knapp vor Beginn des Knickabschnittes 7.

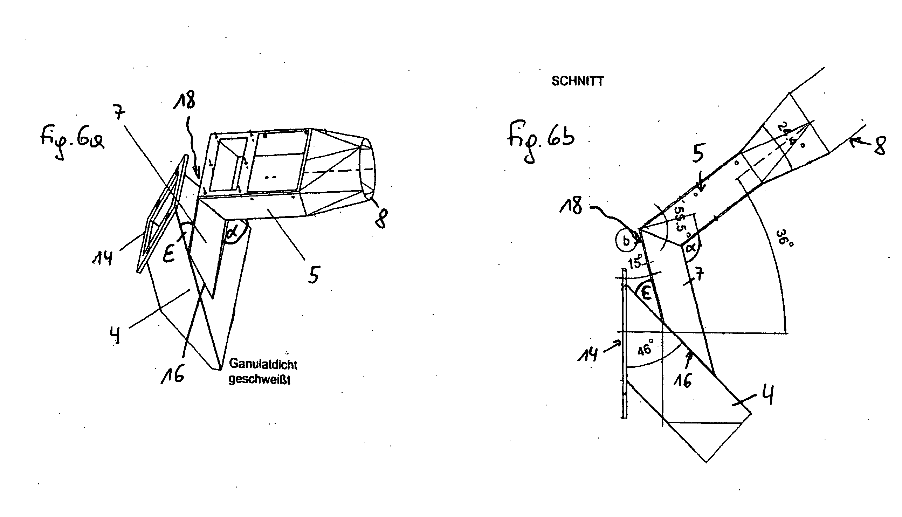

In Fig. 6a und 6b ist der Bereich einer möglichen Ausführungsform des Zugabestutzens 4 in Detailansicht, nämlich in einer Gesamtansicht und in seitlicher Schnittansicht, dargestellt. Erkennbar ist der Endbereich der Materialrutsche 5, in dem sich der Querschnitt auf eine rechteckige Form verändert. Daran in Fließverbindung über den Winkel α angeschlossen, ist der Knickabschnitt 7 mit seiner Wirkung als Prallblech 18. In weiterer Folge mündet der Knickabschnitt 7 stromabwärts von oben über die Ausnehmung 16 und in spitzem Winkel in den mittleren Bereich des schrägen Zugabestutzens 4. Hier treffen sich auch die beiden Materialströme der noch amorphen Rohpolymere und der bereits teilkristallinen rückzumischenden Teilchen. Der Zugabestutzen 4 wird nach unten zu kegelförmig breiter.

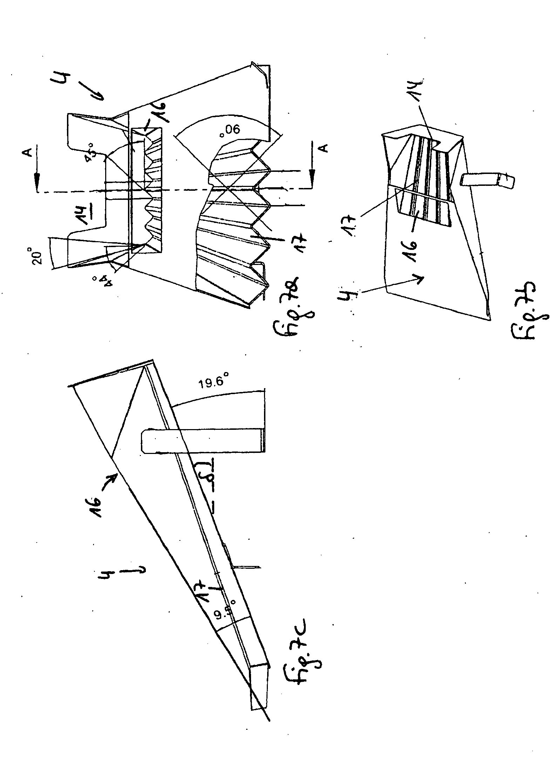

In Fig. 7a, b und c ist eine mögliche Ausgestaltung des Zugabestutzens 4 im Detail dargestellt. Fig. 7a zeigt eine Ansicht von vorne, wobei zur besseren Verdeutlichung Teile der oberen Abdeckung entfernt wurden. Fig. 7b zeigt eine Gesamtansicht. Fig. 7c zeigt eine Ansicht von der Seite, in der die schräge Neigung des Zugabestutzens 4 unter dem Winkel δ, im vorliegenden Fall etwa 20°, erkennbar ist.

Der Zugabestutzen 4 verbreitert sich nach unten zu fächerförmig und weist auf seiner unteren Rutschfläche eine Anzahl von geraden Rinnen 17 auf. Diese Rinnen 17 verlaufen in Strömungsrichtung von der Zentrifuge 12 zum Kristallisationsbehälter 1. Die mittlere Rinne 17 ist parallel zur Ebene 9 ausgerichtet, die links und rechts anschließenden Rinnen 17 sich fächerförmig nach außen geneigt, wodurch die oberen Kanten zwischen den Rinnen 17 nicht parallel zueinander ausgerichtet sind, sondern leicht divergieren.

Jede Rinne 17 weist einen dreieckigen Querschnitt auf und besitzt zwei Flankenflächen, die zueinander winkelig angestellt sind und auf diese Weise die vertiefte Rinne 17 ausbilden, in der das Material rutschen kann. Die beiden Flankenflächen sind im vorliegenden Ausführungsbeispiel unter einem Winkel von etwa 90° zueinander angestellt.

Die Höhe bzw. Tiefe jeder Rinne 17 vergrößert sich nach unten zu kontinuierlich nahezu auf 170 bis 180 % der Höhe bzw. Tiefe am oberen Ende jeder Rinne 17. Auch die Breite jeder Rinne 17 vergrößert sich in gleichen Ausmaß.

Jede Rinne 17 ist demnach gerade, nach unten geneigt und ihre Höhe bzw. Tiefe sowie ihre Breite nehmen nach unten hin zu. Das Rohpolymermaterial, das über die Zugabeöffnung 14 eintritt und auch das von oben kommende teilkristalline Material rutschen somit in diesen Rinnen 17 und werden dadurch gleichmäßig über die gesamte Breite des Zugabestutzens 4 verteilt, wodurch eine gute Durchmischung erfolgt und ein breiter Materialstrom in den Kristallisationsreaktor 1 gelangt.

In der Vertikalförderschnecke 3 ist eine weitere Austragsöffnung 10 vorgesehen, über die das teilkristalline Polymer den Rückmischkreislauf verlässt. Diese Austragsöffnung 10 liegt tiefer oder maximal in gleicher Höhe wie die Öffnung 11, im vorliegenden Fall auf der gegenüberliegenden Seite der Öffnung 11. Daran angeschlossen ist eine nicht komprimierende Förderschnecke 13 mit ansteigender Neigung. Diese Förderschnecke 13 ist steuerbar und kann damit der Anteil an ausgebrachtem Polymer genau bemessen werden, wodurch sich auch der Grad der Rückmischung bzw. das Rückmischverhältnis präzise einstellen lässt. Alternativ kann das teilkristalline Material auch direkt aus dem Reaktor 1 abgezweigt und aus dem Kreislauf ausgeschleust werden.

An diese Förderschnecke schließt sich ein Behälter 6 zum Lagern und/oder Weiterbehandeln des Polymermaterials an. Derartige Behältnisse sind aus dem Stand der Technik bekannt, nur exemplarisch kann dieser Behälter 6 ein Octabin oder ein SSP-Reaktor sein.

Auf dieser Vorrichtung läuft das erfindungsgemäße Verfahren wie folgt ab:

Zunächst wird das Verfahren damit eingeleitet, dass - hier nicht dargestellt - eine von einem Extruder geförderte Polymerschmelze über eine Granuliervorrichtung in bekannter Weise zuerst in Stränge geformt und dann in Granulate zerkleinert wird. Anschließend werden die Granulate in der Zentrifuge 12 getrocknet und von Staub- bzw. Feinanteilen befreit und gelangen dann über die Zugabeöffnung 14 in den Bereich des Zugabestutzens 4. Die Granulate sind dabei noch heiß bzw. in ihrem Inneren gegebenenfalls sogar noch aufgeschmolzen. Sie besitzen noch genügend Eigenwärme, um die Abtrocknung der Restfeuchte und die anschließende Kristallisation wirkungsvoll zu unterstützen und zu ermöglichen, ohne dass eine Zuheizung erforderlich wäre. Andererseits sind sie kalt genug, um sich nicht zu verformen bzw. ihre Form beizubehalten. Auf jeden Fall sind diese noch vorwiegend amorphen, warmen Rohgranulate sehr empfindlich gegen ein Verkleben und neigen dazu, insbesondere wenn sie bewegungslos aneinander liegen, miteinander zu einem Kuchen zusammenzubacken, was die Bearbeitung erschwert und verhindert werden soll.

In einem ersten Schritt werden die zu behandelnden überwiegend amorphen und heißen Rohgranulate nunmehr mit einer gewissen Geschwindigkeit von der Zentrifuge 12 in den Zugabestutzen 4 eingebracht und rutschen in weiterer Folge durch die schräge Neigung des Zugabestutzens 4 in den Kristallisationsreaktor 1. Dort verbleiben sie für eine gewisse einstellbare Verweilzeit bei Bedingungen, bei denen die Kristallisationsrate am größten ist, und werden unter ständiger Bewegung stückig gehalten. Dabei tempern sie und es erfolgt zumindest teilweise eine Ausbildung von teilkristallinen Bereichen und der Kristallisationsgrad erhöht sich.

Nach diesem ersten Schritt werden die nunmehr teilkristallinen Polymermaterialien durch die Öffnung 15 im unteren Bereich des Kristallisationsreaktors 1 ausgebracht und gelangen in die Vertikalförderschnecke 3. Von dieser werden sie nach oben gefördert in eine Höhe von etwa über der zweifachen Höhe des Kristallisationsreaktors 1. Die Austragsöffnung 10 zum Behälter 6 ist noch geschlossen, sodass zu Beginn das gesamte teilkristalline Granulat rückgemischt wird.

Das teilkristalline Granulat gelangt über die Öffnung 11 in die Materialrutsche 5 und rutscht diese unter Schwerkrafteinwirkung entlang. Dabei erhält es eine gewisse Geschwindigkeit und auch einen gewissen Bewegungsimpuls und prallt dann im Knickbereich 7 auf das Prallblech bzw. den Prallbereich 18. Dadurch wird das Granulat gebrremst, durcheinandergewirbelt und die Granulatteilchen stoßen gegeneinander und gegen die Wände und erhalten unterschiedliche Richtungen und Relativgeschwindigkeiten. Die gute Verteilung wird durch das Abbremsen der Granulatteilchen erzielt.

Im Zugabestutzen 4 erfolgt dann die Zusammenmischung der beiden Materialströme. Einerseits strömt im Zugabestutzen 4 das überwiegend amorphe Rohgranulat. Andererseits fällt von oben das vom Knickbereich 7 abprallende teilkristalline Granulat hinunter. Auf diese Weise mischen sich die beiden Materialströme in einem Bereich des Zugabestutzens 4 noch vor dem Kristallisationsreaktor 1. Durch die konstruktiven Ausgestaltung und die Geometrie des Zugabestutzens 4 ergibt sich eine gute Durchmischung und auch keine Schichtung der Materialströme. Die nicht zur Verklebung neigenden teilkristallinen Polymerpartikel lagern sich auf diese Weise homogen und statistisch gut verteilt zwischen die klebenden amorpheren Teilchen und es entsteht insgesamt eine intensive homogene Durchmischung, die über die fächerförmige Verbreiterung des Zugabestutzens 4 in den Kristallisationsreaktor 1 eingebracht wird und dort, ohne zu verkleben, von den Misch- und Rührelementen 2 bewegt werden kann.

Der vorliegende Prozess wird kontinuierlich geführt und, nachdem sich im Verfahren ein gewisses Gleichgewicht eingestellt hat, wird nach und nach die Austragsöffnung 10 geöffnet und das Rückmischverhältnis reduziert. Es wird dann weniger teilkristallines Material abgezweigt und rückgemischt und ein Teil des Materials wird über die nicht komprimierende Förderschnecke 13 in den Behälter 6, im vorliegenden Fall ein Oktabin, verbracht. Statt dem Oktabin kann natürlich auch ein beliebiger Behälter, z.B. ein Silo oder ein SSP-Behälter, vorgesehen sein. Das korrekte Rückmischverhältnis bzw. das Ausschleusen des fertigen Materials aus dem Rückmischkreislauf wird im Wesentlichen über die Drehzahl der Vertikalförderschnecke 3 und/oder über die Drehzahl der Verbindungsschnecke 13 zum Behälter 6 gesteuert. Denkbar ist auch, die Öffnungen 11 und 10 über einstellbare Schieber je nach Bedarf zu öffnen oder zu schließen.

Ein vorteilhaftes Gleichgewicht im System stellt sich beispielsweise bei folgenden Parametern ein:

Amorphes PET aus dem Trockner bzw. der Zentrifuge 12 kommend wird mit einer Temperatur von etwa 130°C mit einem Massestrom von 350 kg/h in den Zugabestutzen 4 eingebracht. Gleichzeitig gelangt teilkristallines PET über die Materialrutsche 5 mit einer Temperatur von etwa 145°C mit einem Massestrom von 850 kg/h in den Zugabestutzen 4. Im Zugabestutzen 4 erfolgt die intensive Durchmischung und danach die Einbringung in den Kristallisationsreaktor 1.

Zur ergänzenden Beleuchtung der Erfindung wird folgendes bemerkt:

Geeignete Polymere für eine solche Behandlung sind kristallisierbare thermoplastische Polymere. Die Polymere werden durch eine Polymerisationsreaktion, wie zum Beispiel radikalische, anionische oder kationische Polymerisation, Polyaddition oder Polykondensation aus ihren Monomeren gewonnen. Insbesondere geeignet sind kristallisierbare thermoplastische Polykondensate, wie Polyamid, Polyester, Polykarbonat, Polyhydroxyalkanoate, Polylaktide oder deren Copolymere.

Bei Polyestern handelt es sich um Polymere, die üblicherweise durch Polykondensation aus ihren Monomeren, einer Diol-Komponente und einer Dicarbonsäure-Komponente, gewonnen werden. Typische Beispiele der Polyester sind Polyethylenterephthalat (PET), Polybutylenterephthalat (PBT) und Polyethylennaphthalat (PEN), die entweder als Homopolymer oder als Copolymere zum Einsatz kommen.

Geeignete Polyethylenterephthalate weisen eine intrinsische Viskosität im Bereich von 0.3 bis 1 dl/g auf, gemessen mit 0.5 g PET in 100 ml Phenol / Dichlorbenzol (1:1).

Bei den Polylactiden (PLA) handelt es sich um Polymere, die direkt unter Wasserabspaltung aus Milchsäure oder durch Ringöffnungspolymerisation aus seinen zyklischen Dimeren (Lactiden) gewonnen werden können. Das erfindungsgemäße Verfahren bzw. die Vorrichtung haben sich auch für PLA als vorteilhaft erwiesen.

Bei dem Polymer kann es sich um ein Neumaterial oder um ein Rezyklat handeln. Als Rezyklate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Dem Polymer können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Das Herstellen einer Polymerschmelze erfolgt in aus dem Stand der Technik bekannten Apparaten oder Reaktoren. Grundsätzlich kommen Polymerisationsreaktoren in Frage, in denen Polymere in flüssiger Phase hergestellt werden, wie zum Beispiel Rührkessel, Käfigreaktoren oder Scheibenreaktoren, oder Apparaturen, in denen zuvor hergestellte Polymere aufgeschmolzen werden, wie zum Beispiel Extruder oder Kneter. Die Polymerschmelzeherstellung kann kontinuierlich oder batchweise erfolgen. Für die weitere Verarbeitung sind aber kontinuierliche Prozesse bevorzugt. Unerwünschte flüchtige Substanzen, wie Verunreinigungen aus einem Rezyklat, verbleibende Lösemittel aus der Polymerherstellung sowie Monomere, Dimere, Oligomere oder Spaltprodukte aus der Polymerschmelzeherstellung können über eine Entgasungsvorrichtung, wie Dünnschichtverdampfer oder Extruder, insbesondere Mehrwellenextruder, wie Zweiwellenextruder oder Ringextruder, entfernt werden. Zur Aufbereitung einer Polymerschmelze können weitere Prozessschritte wie zum Beispiel eine Druckerzeugung, eine Filtration, eine Temperierung oder ein Mischen gehören.

Die Partikel können aus der Polymerschmelze auf verschiedene Arten geformt werden. Anwendbar ist ein Zerkleinern von Brocken, Strängen oder Bändern, die aus der Polymerschmelze geformt wurden, oder ein direktes Formen von Partikeln zum Beispiel durch Vertropfen oder Zerstäuben. Die meiste Anwendung finden Verfahren zur Granulation, wobei in einer Austrittsvorrichtung, insbesondere einer Düse oder Düsenplatte, aus der Polymerschmelze einzelne Polymerstränge geformt werden. Zur Herstellung von Granulaten aus den Polymersträngen können die im Stand der Technik bekannten Granulationstechniken, wie Stranggranulation, Wasserringgranulation, Unterwassergranulation oder Kopfgranulation (auch hot face - Granulation), Vertropfung oder Versprühung verwendet werden. Dabei werden die Polymerstränge, die aus den Schmelzekanälen austreten, verfestigt und in eine Vielzahl an einzelnen Granulaten aufgetrennt, wobei das Auftrennen vor oder nach dem Verfestigen erfolgen kann. Trotz der Verwendung des Begriffs "Wasser" in der Bezeichnung der Granulationseinrichtungen können auch andere flüssige Medien verwendet werden. Das Auftrennen zu Partikeln erfolgt zum Beispiel durch eine selbstständige Tropfenbildung, durch den Einsatz eines flüssigen Schermediums oder durch ein mechanisches Trennen, insbesondere Schneiden. Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke.

Das Verfestigen der Polymerschmelze erfolgt durch Kühlen mit Hilfe eines oder mehrerer Kühlfluide, wobei es sich um gasförmige (z. B. Luft, Stickstoff oder CO2) oder flüssige (z. B. Wasser oder Ethylenglykol) Kühlmedien oder eine Kombination daraus handeln kann. Wird ein flüssiges Kühlmedium verwendet, so muss dies nachträglich von den Partikeln abgetrennt werden. Dies kann zum Beispiel durch Absaugen, durch einen Gasstrom, durch einen Pralltrockner oder einen Zentrifugaltrockner erfolgen. Die mittlere Partikelgröße soll zwischen 0.5 mm und 10 mm, bevorzugterweise zwischen 1.5 mm und 5 mm und insbesondere zwischen 2 und 3.5 mm liegen. Als mittlere Partikelgröße gilt der statistische Mittelwert des mittleren Partikeldurchmessers, der sich aus dem Durchschnitt aus Partikelhöhe, -länge und -breite ergibt. Das bevorzugte Granulatgewicht beträgt zwischen 2 und 100 mg, insbesondere über 5 mg, besonders bevorzugt über 10 mg und insbesondere unter 50 mg, besonders bevorzugt unter 30 mg.

Die Partikel sollen bevorzugterweise eine definierte Granulatform, wie zum Beispiel zylinderförmig, kugelförmig, tropfenförmig, kugelähnlich oder einer Design-Form, wie sie zum Beispiel in EP 541 674 (Yau) vorgeschlagen ist, aufweisen. Es können solide Partikel oder poröse Partikel, die zum Beispiel durch Sinterung, Schäumung und dergleichen gewonnen werden, verwendet werden.

Das Kühlen der Partikel kann als Bestandteil der Partikelherstellung erfolgen oder nach der Partikelherstellung fortgesetzt werden. Es kann das gleichen Kühlfluid wie bei der Partikelherstellung verwendet werden. Es können aber auch andere Kühlfluide verwendet werden. Alternativ können auch andere im Stand der Technik bekannte Kühlvorrichtungen verwendet werden.

Nach dem Formen der Polymerpartikel erfolgt der bei der vorliegenden Erfindung relevante Schritt zur zumindest teilweisen Kristallisation in einem Kristallisationsreaktor. Die Kristallisation kann kontinuierlich oder batchweise erfolgen. Üblicherweise erfolgt die Kristallisation auf thermischen Weg. Die dazu notwendige Wärmezufuhr kann beispielsweise über eine beheizte Wand des Kristallisationsreaktors, über beheizte Einbauten im Kristallisationsreaktor, durch Strahlung oder durch Einblasen eines heißen Prozessgases erfolgen, vorzugsweise über die innere Wärme der Partikel bzw. Flakes.

Die Kristallisation soll bei einer geeigneten Temperatur über eine geeignete Verweilzeit erfolgen. Durch die Kristallisation soll vorteilhafterweise zumindest ein Kristallisationsgrad erreicht werden, der eine weitere thermische Behandlung, wie zum Beispiel eine Trocknung oder eine Festphasen-Polykondensation erlaubt, ohne dass es dort zu Verklebungen oder Klumpenbildungen kommt.

Der geeignete Temperaturbereich wird ersichtlich, wenn man die Kristallisationshalbwertszeit, gemessen im DSC, als Funktion der Temperatur aufzeichnet.

Um ein Verkleben der kristallisierenden Polymerpartikel zu verhindern, sollen diese relativ zueinander in Bewegung gehalten werden. Dies kann zum Beispiel durch den Einsatz eines Rührwerkes, eines bewegten Behälters oder unter Einwirkung eines Fluidisierungsgases erfolgen.

Geeignete Kristallisationsreaktoren sind vibrierende Reaktoren, drehende Reaktoren, Reaktoren mit Rührwerken, sowie Reaktoren, die von einem Prozessgas durchströmt werden, wobei die Strömungsgeschwindigkeit des Prozessgases ausreichen muss, um die Polymerpartikel zu bewegen. Besonders geeignete Kristallisationsreaktoren sind Fliessbett- oder Wirbelbettkristallisatoren.

Mehrere Vorrichtungen zur Herstellung von Partikeln können mit einer Kristallisationsvorrichtung verbunden sein. Daraus ergibt sich der Vorteil, dass bei alternierendem Betrieb mehrerer Vorrichtungen zur Herstellung von Partikeln eine konstante Partikelmenge der Kristallisationsvorrichtung zugeführt wird. Optional erfolgt nach dem Schritt zum Anheben des Kristallisationsgrades ein weiterer Schritt zur thermischen Behandlung. Dabei kann es sich beispielsweise um einen Schritt zur weiteren Ausbildung der Kristallstruktur, um einen Schritt zur Trocknung oder Befeuchtung und/oder um einen Schritt zur Festphasenpolykondensation (SSP) handeln.

Direkt nach der Kristallisation oder im Anschluss an den weiteren Schritt zur thermischen Behandlung können die Polymerpartikel auf eine zur Lagerung geeignete Temperatur abgekühlt werden. Die Kühlung erfolgt dabei durch im Stand der Technik bekannte Verfahren, zum Beispiel in Plattenwärmetauschern, in Fliessbettkühlem, in Förderanlagen mit einem Überschuss an Kühlmedium, durch direkten Eintrag in eine Kühlflüssigkeit oder durch Kontakt mit einer kalten Oberfläche. Die Kühlung durch Luft ist vor allem bei PET oder PA vorteilhaft, da diese Materialien hygroskopisch sind.

Später können die Polymerpartikel zu Produkten wie zum Beispiel Fasern, Bändern, Rohren, Folien, Extrusionsblasteilen, Spritzgussteilen oder Sinterteilen verarbeitet werden. Polyethylenterephthalat wird zum Beispiel zu einem großen Teil zu Hohlkörpern, insbesondere Flaschen verarbeitet. Die Polymerpartikel können auch direkt nach der Kristallisation oder im Anschluss an den weiteren Schritt zur thermischen Behandlung zu Produkten verarbeitet werden.

## Patentansprüche

1. Verfahren zur Herstellung von teilkristallinem Polymermaterial, wobei das zu behandelnde, überwiegend amorphe, Rohpolymermaterial, insbesondere Granulate, in einen Kristallisationsreaktor (1) eingebracht und dort, unter Erwärmung, jedoch ohne zu Schmelzen, zumindest teilweise kristallisiert wird, in weiterer Folge das so erhaltene teilkristalline Polymermaterial wieder aus dem Kristallisationsreaktor (1) ausgetragen wird und zumindest ein Teil dieses teilkristallinen Polymermaterials abgezweigt und zur Verringerung der Klebeneigung des Polymermaterials in den Kristallisationsreaktor (1) rückgemischt wird, **dadurch gekennzeichnet, dass** das abgezweigte teilkristalline Polymermaterial vor der Rückmischung in den Kristallisationsreaktor (1) mit dem Rohpolymermaterial zusammengeführt und gemischt wird und erst die Mischung in den Kristallisationsreaktor (1) eingebracht wird.

2. Verfahren nach Anspruch 1, **dadurch gekennzeichnet, dass** die Zusammenführung und Mischung des abgezweigten teilkristallinen Polymermaterials zum Rohpolymermaterial in einem Bereich außerhalb des Kristallisationsreaktors (1), insbesondere in einem Zugabestutzen (4), erfolgt.

3. Verfahren nach Anspruch 2 oder 3, **dadurch gekennzeichnet, dass** das aus dem Kristallisationsreaktor (1) ausgebrachte teilkristalline Polymermaterial, insbesondere über eine Vertikalförderschnecke (3), in eine Höhe oberhalb des Kristallisationsreaktors (1) gebracht wird und das abgezweigte teilkristalline Polymermaterial anschließend unter Schwerkraftwirkung, insbesondere über eine Materialrutsche (5), zum Zugabebereich für dessen Rückmischung rutscht.

4. Verfahren nach einem der Ansprüche 1 bis 3, **dadurch gekennzeichnet, dass** sowohl das abgezweigte teilkristalline Polymermaterial als auch das Rohpolymermaterial am Ort und zum Zeitpunkt ihres Zusammentreffens mit jeweils einer gewissen Strömungsgeschwindigkeit in Fließbewegung sind, wobei die Strömungsrichtungen der beiden Materialströme insbesondere in einem spitzen Winkel ε, von vorzugsweise zwischen 20° und 55°, insbesondere 30° bis 40°, zusammentreffen.

5. Verfahren nach einem der Ansprüche 1 bis 4, **dadurch gekennzeichnet, dass** sowohl das abgezweigte teilkristalline Polymermaterial als auch das Rohpolymermaterial permanent und in jedem Abschnitt des Verfahrens stückig und rieselfähig gehalten werden und/oder dass die Erwärmung des Polymers im Kristallisationsreaktor (1) ohne Zufuhr externer Heizenergie, insbesondere ausschließlich durch die innere Energie der Granulate und/oder durch die bei der Kristallisation entstehende Wärme erfolgt.

6. Vorrichtung zur Durchführung des Verfahrens nach einem der Ansprüche 1 bis 5, umfassend einen Kristallisationsreaktor (1) mit Mitteln (2) zum Bewegen und Stückighalten des im Kristallisationsreaktor (1) vorliegenden Polymermaterials, insbesondere mechanische Misch- und Rührwerkzeuge, und mit einem im oberen Bereich des Kristallisationsreaktors (1) angeordneten Zugabestutzen (4), über den das zu behandelnde, überwiegend amorphe, Rohpolymermaterial einbringbar ist, wobei an den Kristallisationsreaktor (1) eine Übergabestrecke (3,5) angeschlossen ist, über die zumindest ein Teil des teilkristallinen Polymermaterials wieder in den Kristallisationsreaktor (1) rückmischbar ist, **dadurch gekennzeichnet, dass** die Übergabestrecke (3,5) in den Zugabestutzen (4) einmündet.

7. Vorrichtung nach Anspruch 6, **dadurch gekennzeichnet, dass** die Übergabestrecke (3,5) ein, insbesondere im unteren Bereich und/oder direkt an den Kristallisationsreaktor (1) angeschlossenes, Fördermittel (3), vorzugsweise eine Vertikalförderschnecke (3), umfasst, mit dem das aus dem Kristallisationsreaktor (1) austretende teilkristalline Polymermaterial in eine Höhe oberhalb des Kristallisationsreaktors (1) förderbar ist.

8. Vorrichtung nach Anspruch 6 oder 7, **dadurch gekennzeichnet, dass** die Übergabestrecke (3,5) eine, vorzugsweise als Rohr ausgebildete, Materialrutsche (5) umfasst, die, ausgehend von einem oberen Bereich des Fördermittels (3), schräg in den Zugabestutzen (4) einmündet, wobei die Materialrutsche (5) vorzugsweise einen durchschnittlichen Neigungswinkel β zur Horizontalen zwischen 15° und 50°, insbesondere zwischen 20° und 30°, aufweist.

9. Vorrichtung nach einem der Ansprüche 6 bis 8, **dadurch gekennzeichnet, dass** der Zugabestutzen (4) in einem oberen Kantenbereich des Kristallisationsreaktors (1) angeordnet ist und/oder, insbesondere unter einem Winkel δ zwischen 25° und 60°, insbesondere 30° bis 40°, zur Horizontalen, nach unten geneigt ist, wodurch das Polymermaterial unter Schwerkrafteinwirkung in den Kristallisationsreaktor (1) rutschen kann.

10. Vorrichtung nach einem der Ansprüche 6 bis 9, **dadurch gekennzeichnet, dass** die Materialrutsche (5) einen, dem Fördermittel (3) nahen, oberen Abschnitt (8) und einen, dem Zugabestutzen (4) nahen untersten Endbereich bzw. Knickabschnitt (7) aufweist, wobei der Knickabschnitt (7) zum Zugabestutzen (4) hin winkelig angestellt bzw. nach unten abgeknickt ist, wobei der Winkel α zwischen dem oberen Abschnitt (8) der Materialrutsche (5) und dem Knickabschnitt (7), insbesondere zwischen 60° und 140°, vorzugsweise zwischen 90° und 100°, ist.

11. Vorrichtung nach einem der Ansprüche 6 bis 10, **dadurch gekennzeichnet, dass** die Mittelachse des Zugabestutzens (4) mit der Mittelachse des Knickabschnitts (7) einen spitzen Winkel ε, vorzugsweise zwischen 20° und 55°, insbesondere 30° bis 40°, einschließt.

12. Vorrichtung nach einem der Ansprüche 6 bis 11, **dadurch gekennzeichnet, dass** die Mittelachse des Knickabschnitts (7) in einem Winkel ζ zur Vertikalen zwischen 0° und 45°, insbesondere zwischen 15° und 25°, zusammentreffen
und/oder
dass die Mittelachse des Knickabschnitts (7) und die Mittelachse des Zugabestutzens (4) eine, üblicherweise vertikal ausgerichtete, Ebene (9) definieren bzw. aufspannen, die den Kristallisationsreaktor (1) in zwei im wesentlichen gleich große Teilräume aufteilt, wobei vorzugsweise vorgesehen ist, dass das Fördermittel (3) bzw. die Mittelachse der Vertikalförderschnecke (3) ebenfalls in der Ebene (9) liegt.

13. Vorrichtung nach einem der Ansprüche 6 bis 12, **dadurch gekennzeichnet, dass** sich der Zugabestutzen (4) in seinem dem Kristallisationsreaktor (1) nahen Endbereich fächerförmig verbreitert,
und/oder
dass in der unteren Rutschfläche des Zugabestutzens (4) eine Anzahl an in Längsrichtung verlaufenden, geraden vertieften Rinnen (17) ausgebildet ist, wobei vorzugsweise die Höhen bzw. Tiefen und/oder die Breiten der Rinnen (17) stromabwärts bzw. in Fließrichtung zunehmen.

14. Vorrichtung nach einem der Ansprüche 6 bis 13, **dadurch gekennzeichnet, dass** in der Vertikalförderschnecke (3) eine weitere Austragsöffnung (10) zum Ausbringen vorgesehen ist, wobei die Austragsöffnung (10) tiefer als oder maximal in gleicher Höhe wie die Öffnung (11), an die die Materialrutsche (5) angeschlossen ist, liegt.

15. Vorrichtung nach einem der Ansprüche 6 bis 14, **dadurch gekennzeichnet, dass** eine Steuerungseinrichtung vorgesehen ist, mit der derjenige Anteil des teilkristallinen Polymermaterials, der in die Materialrutsche (5) abgezweigt wird und/oder derjenige Anteil des teilkristallinen Polymermaterials, der über die Austragsöffnung (10) ausgebracht wird, einstellbar ist,
und/oder
dass an das Fördermittel (3) bzw. an die Austragsöffnung (10), beispielsweise über eine Förderschnecke, ein Behälter (6) zum Auffangen und/oder Weiterbehandeln des teilkristallinen Polymermaterials angeschlossen ist,
und/oder
dass vor dem Kristallisationsreaktor (1) bzw. vor dem Zugabestutzen (4) eine Zentrifuge (12) zur Abscheidung von Oberflächenfeuchte und allfälligem Feinanteil angeordnet ist, mit der das Rohpolymermaterial mit erhöhter Geschwindigkeit, vorzugsweise tangential, in
den Zugabestutzen (4) eingebracht wird.

## Claims

1. A method for producing partially crystalline polymeric material, wherein the mainly amorphous raw polymeric material to be treated, in particular granules, are introduced into a crystallization reactor (1) and at least partially crystalized therein under heating, but without melting, whereafter the partially crystalline polymeric material thus obtained is discharged from the crystallization reactor (1), at least a part of this partially crystalline polymeric material is tapped off and remixed into the crystallization reactor (1) to reduce the propensity to stick together of the polymeric material, **characterized in that** the partially crystalline polymeric material tapped off and the raw polymeric material are combined and mixed before remixing into the crystallization reactor (1) and only the mixture is introduced into the crystallization reactor (1).

2. The method according to claim 1 **characterized in that** combining and mixing the partially crystalline polymeric material tapped off and the raw polymeric material is effected in an area outside of the crystallization reactor (1), in particular in a filling union (4).

3. The method according to claim 2 or 3 **characterized in that** the partially crystalline polymeric material discharged from the crystallization reactor (1) is taken to a height above the crystallization reactor (1), in particular via a vertical screw conveyor (3), and the partially crystalline polymeric material tapped off subsequently flows to the addition area by means of gravity, in particular via a material chute (5), to be remixed.

4. The method according to any one of the claims 1 to 3 **characterized in that** the partially crystalline polymeric material tapped off as well as the raw polymeric material are each flowing at a certain flow velocity at the place and the time of meeting, wherein the flow directions of the two material flows preferably meet each other at an acute angel ε of between 20 and 55°, most preferably 30 to 40°

5. The method according to any one of the claims 1 to 4 **characterized in that** the partially crystalline polymeric material tapped off as well as the raw polymeric material are permanently and in every section of the method maintained particulate and free flowing and/or that the polymer is heated in the crystallization reactor (1) without any input of external heating energy, in particular exclusively by the internal energy of the granules and/or by the heat produced during crystallization.

6. A device for implementing the method according to any one of the claims 1 to 5, comprising a crystallization reactor (1) with means (2) for moving the polymeric material in the crystallization reactor (1) and maintaining it particulate, in particular mechanical mixing and stirring devices, and with a filling union (4) through which the mainly amorphous raw polymeric material to be treated may be introduced, wherein a transfer path (3,5) is connected to the crystallization reactor (1) via which at least part of the partially crystalline polymeric material may be remixed into the crystallization reactor (1), **characterized in that** the transfer path (3,5) leads into the filling union (4).

7. The device according to claim 6 **characterized in that** the transfer path (3,5) comprises a conveying means (3), in particular a vertical screw conveyor (3), that is connected to the crystallization reactor (1) in the lower area and/or directly, which is able to convey the partially crystalline polymeric material discharged from the crystallization reactor (1) to a height above the crystallization reactor (1).

8. The device according to claim 6 or 7 **characterized in that** the transfer path (3,5) comprises a material chute (5), preferably in the form of a tube, which, starting from an upper area of the conveying means (3), obliquely leads into the filling union (4), wherein the material chute (5) preferably has an average inclination angle β to the horizontal of between 15° and 50°, most preferably between 20° and 30°.

9. The device according to any one of the claims 6 to 8 **characterized in that** the filling union (4) is arranged in an upper edge area of the crystallization reactor (1) and/or is inclined downwards at an angle δ of between 25° and 60°, most preferably 30° to 40°, to the horizontal, so that the polymeric material can slide into the crystallization reactor (1) by means of gravity.

10. The device according to any one of the claims 6 to 9 **characterized in that** the material chute (5) has an upper portion (8) close to the conveying means (3) and a lowest end area or bent portion (7) close to the filling union (4), wherein the bent portion (7) is set at an angle with regard to the filling union (4) or is bent downwards, wherein the angle α between the upper portion (8) of the material chute (5) and the bent potion (7) is particularly between 60° and 140°, preferably between 90° and 100°.

11. The device according to any one of the claims 6 to 10 **characterized in that** the central axis of the filing union (4) and the central axis of the bent portion (7) enclose an acute angle ε of preferably between 20° and 55°, in particular 30° and 40°.

12. The device according to any one of the claims 6 to 11 **characterized in that** the central axis of the bent portion (7) is oriented almost vertically, in particular at an angle ζ to the vertical of between 0° and 45°, most prefeably between 15° and 25°,
and/or
that the central axis of the bent portion (7) and the central axis of the filling union (4) define or span a, usually vertical, plane (9) that divides the crystallization reactor (1) into two partial areas of substantially the same size, wherein it is preferably provided that the conveying means (3) or the central axis of the vertical screw conveyor (3) also lies in this plane (9).

13. The device according to any one of the claims 6 to 12 **characterized in that** the end area of the filling union (4) close to the crystallization reactor (1) widens in a fanlike way
and/or
that the lower sliding surface of the filling union (4) has a number of straight recessed grooves (17) running lengthwise, wherein preferably the heights or depths and/or widths of the grooves increase downstream or in flow direction.

14. The device according to any one of the claims 6 to 13 **characterized in that** a further discharge port (10) for discharging is provided in the vertical screw conveyor (3), wherein the discharge port (10) is lower or maximally at the same height as the port (11) at which the material chute (5) is connected.

15. The device according to any one of the claims 6 to 14 **characterized in that** a control device is provided by means of which the portion of the partially crystalline polymeric material that is taped off into the material chute (5) and/or the portion of the partially crystalline polymeric material that is discharged via the discharge port (10) is adjustable
and/or
that the conveying means (3) or discharge port (10) is connected to a vessel (6) for collecting and/or further treatment of the partially crystalline polymeric material, e.g. by means of a screw conveyor,
and/or
a centrifuge (12) for separating surface humidity and any fines is arranged before the crystallization reactor (1) or the filling union (4), with which the raw polymeric material is introduced into the filling union (4) at an increased velocity, preferably tangentially.

## Revendications

1. Procédé pour produire un matériau polymère partiellement cristallin, le matériau polymère brut à traiter, principalement amorphe, notamment des granules, étant introduit dans un réacteur (1) de cristallisation, y étant au moins partiellement cristallisé sous réchauffement, mais sans se fondre, le matériau polymère partiellement cristallin ainsi obtenu étant ensuite déchargé du réacteur (1) de cristallisation et au moins une partie de ce matériau polymère partiellement cristallin étant dérivé et rétromélangé dans le réacteur (1) de cristallisation afin de réduire la tendance à coller du matériau polymère, **caractérisé en ce que** le matériau partiellement cristallin dérivé est mis en contact et mélangé avec le matériau polymère brut avant être rétromélangé dans le réacteur (1) et **en ce que** le mélange est effectué et après inséré dans le réacteur (1) de cristallisation.

2. Procédé selon la revendication 1, **caractérisé en ce que** la mise en contact et le mélange du matériau polymère partiellement cristallin dérivé et le matériau polymère brut a lieu à l'extérieur du réacteur (1) de cristallisation, notamment dans un embout d'addition (4).

3. Procédé selon la revendication 2 ou 3, **caractérisé en ce que** le matériau polymère partiellement cristallin déchargé du réacteur (1) de cristallisation est amené, notamment à l'aide d'une vis sans fin (3) verticale, à une hauteur au-dessus du réacteur (1) de cristallisation et **en ce que** le matériau polymère partiellement cristallin ensuite glisse sous l'action de la gravité et notamment à travers une rampe (5) d'alimentation vers la zone d'addition en vue de son rétromélange.

4. Procédé selon l'une des revendications 1 à 3, **caractérisé en ce que** et le matériau polymère partiellement cristallin dérivé et le matériau polymère brut sont, à l'endroit et au moment de leur rencontre, en écoulement avec une certaine vélocité d'écoulement, les sens d'écoulement des deux écoulements de matériau se rencontrant notamment sous un angle aigu ε, de préférence de entre 20 ° et 55 °, notamment de 30 ° à 40 °.

5. Procédé selon l'une des revendications 1 à 4, **caractérisé en ce que** et le polymère partiellement cristallin dérivé et le matériau polymère brut sont constamment maintenus en morceaux et à écoulement facile pendant chaque étape du procédé et/ou **en ce que** le réchauffement du polymère dans le réacteur (1) de cristallisations a lieu sans l'addition d'énergie de chauffage externe, notamment exclusivement à travers l'énergie interne des granules et/ou de la chaleur produite lors de la cristallisation.

6. Dispositif pour appliquer le procédé selon l'une des revendications 1 à 5, comportant un réacteur (1) de cristallisation avec des moyens (2) pour remuer et maintenir en morceaux le matériau polymère présent dans le réacteur (1) de cristallisation, notamment des outils mécaniques de pour mélanger et remuer, et avec un embout d'addition (4) situé dans la zone supérieure du réacteur (1) de cristallisation, à travers lequel le matériau polymère brut, principalement amorphe, à traiter, peut être introduit, un tronçon (3, 5) de transfert étant relié au réacteur (1) de cristallisation, à travers lequel au moins une partie du matériau polymère partiellement cristallin peut être rétromélangé dans le réacteur (1) de cristallisation, **caractérisé en ce que** le tronçon (3,5) de transfert débouche dans l'embout d'addition (4).

7. Dispositif selon la revendication 6, **caractérisé en ce que** le tronçon (3,5) de transfert comporte un moyen (3) de transport, de préférence une vis sans fin (3) verticale, notamment relié dans la zone inférieure et/ou directement au réacteur (1) de cristallisation, à travers lequel le matériau polymère partiellement cristallin s'écoulant du réacteur (1) de cristallisation peut être transporté jusqu'à une hauteur au-dessus du réacteur (1) de cristallisation.

8. Dispositif selon la revendication 6 ou 7, **caractérisé en ce que** le tronçon (3,5) de transfert comporte une rampe (5) d'alimentation, de préférence sous forme to tuyau, qui débouche de façon oblique dans l'embout (4) d'addition, à partir d'une zone supérieure du moyen (3) de transport, la rampe (5) d'alimentation présentant de préférence un angle d'inclinaison β moyen par rapport à l'horizontale de entre 15 ° et 50 °, notamment entre 20 ° et 30°.

9. Dispositif selon l'une des revendications 6 à 8, **caractérisé en ce que** l'embout (4) d'addition est disposé dans une zone de bord supérieure du réacteur (1) de cristallisation et/ou incliné vers le bas notamment sous un angle δ de entre 25 ° et 60 °, notamment de 30 ° à 40 °, par rapport à l'horizontale, grâce à quoi le matériau polymère peut glisser dans le réacteur (1) de cristallisation sous l'action de la gravité.

10. Dispositif selon l'une des revendications 6 à 9, **caractérisé en ce que** la rampe (5) à alimentation comporte une portion (8) supérieure près du moyen (3) de transport, et une zone la plus inférieure ou une portion (7) de pli près de l'embout (4) d'addition, la portion (7) de pli étant disposée angulairement ou pliée vers le bas vers l'embout (4) d'addition , l'angle α entre la portion (8) supérieure de la rampe (5) d'alimentation et la portion (7) de pli est notamment de entre 60 ° et 140 °, de préférence entre 90 ° et 100 °.

11. Dispositif selon l'une des revendications 6 à 10, **caractérisé en ce que** l'axe central de l'embout (4) d'addition fait avec l'axe central de la portion (7) de pli un angle aigu ε, de préférence entre 20 ° et 55 °, notamment de 30° 40 °.

12. Dispositif selon l'une des revendications 6 à 11, **caractérisé en ce que** l'axe central de la portion (7) de pli est orienté sous un angle ζ par rapport à la verticale de entre 0 ° et 45 °, notamment entre 15 ° et 25 °
et/ou
**en ce que** l'axe central de la portion (7) de pli et l'axe central de l'embout (4) d'addition définissent ou fixent un plan (9), normalement vertical, divisant le réacteur (1) de cristallisation en deux espaces partiels essentiellement de la même dimension, étant de préférence prévu que le moyen (3) de transport ou l'axe central de la vis sans fin (3) verticale sont également situés dans le plan (9)

13. Dispositif selon l'une des revendications 6 à12, **caractérisé en ce que** l'embout (4) d'addition s'élargit en éventail dans sa zone d'extrémité près du réacteur (1) de cristallisation,
et/ou
**en ce que** dans la surface de glissement inférieure de l'embout (4) d'addition un nombre de canaux (17) disposés dans le sens longitudinal et creusés de façon rectiligne est formé, les hauteurs ou profondeurs et/ou largeurs des canaux (17) augmentant en aval ou dans le sens d'écoulement.

14. Dispositif selon l'une des revendications 6 à 13, **caractérisé en ce que** dans la vis sans fin (3) verticale une autre ouverture (10) de décharge est formée pour la décharge, l'ouverture (10) de décharge étant située plus bas ou au maximum au même niveau que l'ouverture (11) reliée à la rampe (5) d'alimentation.

15. Dispositif selon l'une des revendications 6 à 14, **caractérisé en ce que** une installation de contrôle est prévue, à travers laquelle peut être réglée la partie du matériau polymère partiellement cristallin étant déviée dans la rampe (5) d'alimentation et/ou la partie du matériau polymère partiellement cristallin étant déchargée à travers l'ouverture (10) de décharge,
et/ou
**en ce qu'**un réservoir (6) pour recueillir et/ou transformer ultérieurement le matériau polymère partiellement cristallin est raccordé au moyen (3) de transport ou à l'ouverture (10) de décharge, par exemple par une vis sans fin
et/ou
**en ce que** une centrifuge (12) pour déposer l'humidité superficielle et de fines éventuelles est disposée avant le réacteur (1) de cristallisation ou l'embout (4) d'addition, par laquelle le matériau polymère brut est inséré avec une vélocité accélérée, de préférence tangentiellement, dans l'embout (4) d'addition.
